# EUROPÄISCHE PATENTSCHRIFT

(11) **EP 2 740 985 B1**
(45) Veröffentlichungstag und Bekanntmachung des Hinweises auf die Patenterteilung: **09.09.2015**
(21) Anmeldenummer: 13195983.5
(22) Anmeldetag: 06.12.2013
(51) Int. Cl.: F16L 25/00, F16L 37/15, F16L 37/56

(54) **Schnellkupplung mit Sicherheitsverriegelung**
Quick coupling with safety lock
Raccord rapide avec verrouillage de securité

(30) Priorität: 07.12.2012 DE 102012111947
(43) Veröffentlichungstag der Anmeldung: 11.06.2014
(73) Patentinhaber: Parker Hannifin Manufacturing Sweden AB, 54106 Skövde (SE)
(72) Erfinder: Axell, Jesper, 54132 Skövde (SE)
(74) Vertreter: Müller, Karl-Ernst

(56) Entgegenhaltungen:
- EP-A1- 0 682 203
- WO-A1-2008/058301
- DE-A1-102006 060 005

## Beschreibung

Die Erfindung betrifft eine Schnellkupplung zum Verbinden von wenigstens zwei unter Druck stehenden Leitungen mit einem ersten und einem zweiten, jeweils die zu verbindenden Leitungsanschlüsse tragenden Verbindungsblock, wobei der erste und der zweite Verbindungsblock mittels eines an einem der Verbindungsblöcke drehbar angeordneten und beim Kupplungsvorgang ein an dem anderen Verbindungsblock angebrachtes Aufnahmeelement in einer Steuerkurve erfassenden Kupplungshebels in eine druckdichte Verbindung miteinander bringbar sind.

Eine gattungsgemäße Schnellkupplung mit den vorstehend genannten Merkmalen ist in der DE 10 2004 055 001 A1 beschrieben. An den beiden Verbindungsblöcken der bekannten Schnellkupplung sind einerseits jeweils die Leitungsanschlüsse für die mittels der Schnellkupplung zu verbindenden Leitungen angeordnet, und andererseits an den einander gegenüberliegenden Seiten der beiden Verbindungsblöcke an dem einen Verbindungsblock ein entsprechend jedem Leitungsanschluss zugeordnetes männliches Steckteil und an dem anderen Verbindungsblock ein entsprechend jedem Leitungsanschluss zugeordnetes weibliches Hülsenteil zur dichtenden Aufnahme des Steckteils in der Kupplungsstellung der Verbindungsblöcke. Diese Kupplungsstellung ist über die Betätigung eines Kupplungshebels herbeizuführen, der an einem der beiden Verbindungsblöcke drehbar angebracht ist und beim Kupplungsvorgang einen an dem jeweils anderen Verbindungsblock angebrachtes Aufnahmeelement erfasst und in einer Steuerkurve derart führt, dass die beiden Verbindungsblöcke gegeneinander gezogen werden. Der Kupplungshebel soll in seiner Kupplungsposition arretierbar sein. Entsprechend gibt der Kupplungshebel beim Entkuppeln der Kupplung das Aufnahmeelement wieder frei. Mit der bekannten Schnellkupplung ist noch der Nachteil verbunden, dass durch eine versehentliche Betätigung des Kupplungshebels oder aber auch durch eine bei hoher Krafteinleitung in die Verbindungsblöcke möglicherweise selbsttätig auftretende Verschwenkung die unter Druck stehende Kupplung entkuppelbar ist.

Weiterhin ist aus der DE 42 93 023 C2 eine Schnellanschluss-Aufnahme zum Befestigen eines Arbeitsgerätes bzw. von dessen Adapter in einer Aufnahme bekannt, wobei ein inneres Rohrende des Adapters in einer Halteöffnung der Aufnahme aufzunehmen ist und ein Sperrmechanismus den Adapter innerhalb der Halteöffnung verriegelt. Die zugeordneten Anlageflächen von Adapter und Aufnahme weisen jeweils eine Z-förmige Struktur auf. Als Sperrmechanismus ist ein mittels eines Handgriffes bewegbarer Sperrstift vorgesehen, der sich exzentrisch aus einer Freigabestellung, in der seine Mitte außerhalb der Halteöffnung in der Aufnahme ist, in eine Sperrstellung, in der seine Mitte weiter in die Halteöffnung hineinbewegt ist, dreht. Wenn der Sperrstift sich in die Sperrstellung bewegt, drückt er den Adapter weiter in die Halteöffnung hinein, so dass dieser in der Aufnahme stabil befestigt wird. Der Sperrstift muss positiv in der Halteöffnung aufgenommen sein, bevor der Adapter in die Sperrstellung bewegt wird. Hiermit ist noch der Nachteil verbunden, dass sich nur eine einseitige Abstützung des Sperrstiftes zwischen den miteinander zu verriegelnden Bauteilen ergibt und im übrigen eine aufwändig zu realisierende Bauform von Adapter und Aufnahme erforderlich ist.

Der Erfindung liegt die Aufgabe zugrunde, eine bekannte Schnellkupplung mit den gattungsgemäßen Merkmalen mit einer zusätzlichen Sicherung des Kupplungszustandes auszustatten.

Die Lösung dieser Aufgabe ergibt sich einschließlich vorteilhafter Ausgestaltungen und Weiterbildungen der Erfindung aus dem Inhalt des Patentanspruchs 1 bzw. der weiteren Patentansprüche, welche dieser Beschreibung nachgestellt sind.

Die Erfindung sieht in ihrem Grundgedanken eine zusätzliche Sicherheitsverriegelung dadurch vor, dass zur Sicherung der Kupplungsstellung von erstem und zweitem Verbindungsblock ein in eine in den beiden Verbindungsblöcken fluchtend angeordnete Bohrung einsteckbarer und sich axial an einem der Verbindungsblöcke abstützender Sicherungsbolzen vorgesehen ist, der in seiner in dem anderen Verbindungsblock liegenden Ebene eine ihn quer durchsetzende Ausnehmung zur Aufnahme eines in dem anderen Verbindungsblock quer zur Längsachse des Sicherungsbolzens verschiebbar angeordneten Sicherungsschiebers aufweist, wobei der Sicherungsschieber in seiner in der Ausnehmung des Sicherungsbolzens liegenden Sicherungsstellung die Ausnehmung des Sicherungsbolzens quer durchsetzt und sich beidseitig der den Sicherungsbolzen aufnehmenden Bohrung in dem den Sicherungsschieber führenden Verbindungsblock abstützt, und zwischen seiner Sicherungsstellung und einer außerhalb der Ausnehmung des Sicherungsbolzens gelegenen Freigabestellung mittels einer an dem Sicherungsschieber angreifenden Betätigung axial verschiebbar ist.

Mit der Erfindung ist der Vorteil verbunden, dass im gekuppelten Zustand mit in Funktion gesetzter Sicherheitsverriegelung ein Entkuppeln der Schnellkupplung nur möglich ist, wenn nacheinander zunächst die Sicherheitsverriegelung durch Ausfahren des Sicherungsschiebers aus dem Eingriff mit dem Sicherungsbolzen gelöst und anschließend der Kupplungshebel in die Entkupplungsstellung gebracht wird. Ein weiterer Vorteil ergibt sich daraus, dass zusätzlich zu der jeweils an den Außenseiten der Verbindungsblöcke über den daran angeordneten Kupplungshebel mit Aufnahmeelement aufgebrachten Verbindungskraft über den mit dem Sicherungsbolzen zusammenwirkenden Sicherungsschieber eine zusätzliche, die Verbindungsblöcke gegeneinander ziehende Verbindungskraft ausgeübt und während des Kupplungszustandes aufrechterhalten ist. Weiterhin ergibt sich in vorteilhafter Weise aus der beidseitigen Abstützung des Sicherungsschiebers in dem dem Sicherungsschieber führenden Verbindungsblock eine gute Kraftübertragung zwischen den beiden Verbindungsblöcken.

Nach der Erfindung ist vorgesehen, dass der Sicherungsschieber in seiner Sicherungsstellung die Ausnehmung des Sicherungsbolzens quer durchsetzt und sich beidseitig der den Sicherungsbolzen aufnehmenden Bohrung in dem den Sicherungsschieber führenden Verbindungsblock abstützt, wodurch eine gute Kraftübertragung zwischen den beiden Verbindungsblöcken realisiert ist.

In einer zweckmäßigen Ausführungsform der Erfindung kann vorgesehen sein, dass der Sicherungsschieber eine Keilform mit einer senkrecht zur Längsachse des Sicherungsbolzens ausgerichteten Fläche und mit einer gegenüberliegenden, unter einem Keilwinkel geneigten Fläche ausgebildet ist, wobei die den Sicherungsschieber in dessen Sicherungsstellung aufnehmende Ausnehmung des Sicherungsbolzens zu den Flächen des Sicherungsschiebers kongruente Flächen aufweist, so dass mit einem zunehmenden Einfahren des Sicherungsschiebers in die Ausnehmung des Sicherungsbolzens eine Erhöhung der in der Achse des Sicherungsbolzens wirkenden Verbindungskraft erfolgt.

In einer zweckmäßigen Ausführungsform der Erfindung ist dabei vorgesehen, dass der Keilwinkel der Flächen von Sicherungsschieber und Ausnehmung derart ausgelegt ist, dass sich eine Selbsthemmung der Keilverbindung zwischen Sicherungsschieber und Sicherungsbolzen einstellt; auf diese Weise ist ein selbsttätiges Lösen der Sicherheitsverriegelung ausgeschlossen.

Zur Erleichterung des Einfahrens des Sicherungsschiebers in die Ausnehmung des Sicherungsbolzens beim Aktivieren der Sicherungsverriegelung kann vorgesehen sein, dass der Sicherungsschieber an seinem vorderen Ende mit einer Anschrägung versehen ist.

Im Hinblick auf die Betätigung der axialen Verschiebung des Sicherungsschiebers in dem zugeordneten Verbindungsblock beim Kuppeln bzw. Entkuppeln der Schnellkupplung ist nach einem Ausführungsbeispiel der Erfindung vorgesehen, dass die Betätigung aus einer in dem den Sicherungsschieber aufweisenden Verbindungsblock drehbar angeordneten Hülse besteht und der zumindest auf einem Teil seiner Längserstreckung von der Hülse umfasste Sicherungsschieber mit
wenigstens einem radial von ihm abstehenden Stift in einer schraubenförmigen Kulisse der Hülse geführt ist derart, dass eine Drehung der Hülse in eine axiale Verschiebung des Sicherungsschiebers umgesetzt wird, wobei die Hülse mittels einer an ihr angreifenden, außerhalb des Verbindungsblocks gelegenen Handhabe drehbar ist. Somit ist durch Drehung der Hülse mittels der zugeordneten Handhabe eine axiale Verschiebung des Sicherungsschiebers zwischen dessen Freigabestellung und dessen Sicherungsstellung zu bewirken.

Alternativ kann vorgesehen sein, dass die Betätigung für die axiale Verschiebung des Sicherungsschiebers aus einem an dem den Sicherungsschieber aufweisenden Verbindungsblock angeordneten, mit dem Sicherungsschieber zu dessen axialer Verschiebung verbundenen Kniegelenkhebel besteht.

In wiederum einer alternativen Ausführungsform kann vorgesehen sein, dass die Betätigung für die axiale Verschiebung des Sicherungsschiebers aus einer an dem den Sicherungsschieber aufweisenden Verbindungsblock drehbar angeordneten Gewindestange besteht, auf welcher der Sicherungsschieber derart angeordnet und geführt ist, dass eine Drehung der Gewindestange in eine axiale Verschiebung des Sicherungsschiebers umgesetzt wird, wobei die Gewindestange mittels einer an ihr angreifenden, außerhalb des Verbindungsblocks gelegenen Handhabe drehbar ist.

Auch andere geeignete Betätigungen, die eine axiale Bewegung des Sicherungsschiebers in dem zugeordneten Verbindungsblock herbeiführen, sind von der Erfindung umfasst.

In der Zeichnung sind Ausführungsbeispiele der Erfindung wiedergegeben, welche nachstehend beschrieben sind. Es zeigen:
- Fig. 1: die beiden die Schnellkupplung bildenden Verbindungsblöcke mit einem daran schwenkbar angeordneten Kupplungshebel in einer auseinander gezogenen Darstellung, jeweils in einer Perspektivdarstellung,
- Fig. 2: die Schnellkupplung nach Figur 1 bei zusammengefahrenen Verbindungsblöcken in Perspektivdarstellung,
- Fig. 3: den gemäß Figur 1 oberen Verbindungsblock in einer Schnittdarstellung,
- Fig. 4a: den gemäß Figur unteren Verbindungsblock in einer Schnittdarstellung in der Freigabestellung des Sicherungsschiebers,
- Fig. 4b: den Gegenstand der Figur 4a in der Sicherungsstellung des Sicherungsschiebers,
- Fig. 5: die Schnellkupplung bei gemäß Figur 2 zusammengefahrenen Verbindungsblöcken in der Schnittdarstellung entsprechend Figuren 3 und 4b,
- Fig. 6: die Schnellkupplung in einer abgewandelten Ausführungsform mit aneinander anliegendem ersten und zweiten Verbindungsblock sowie in die Verbindungsblöcke eingesetztem Sicherungsbolzen und noch in der Freigabestellung befindlichem Sicherungsschieber in einer Schnittansicht.

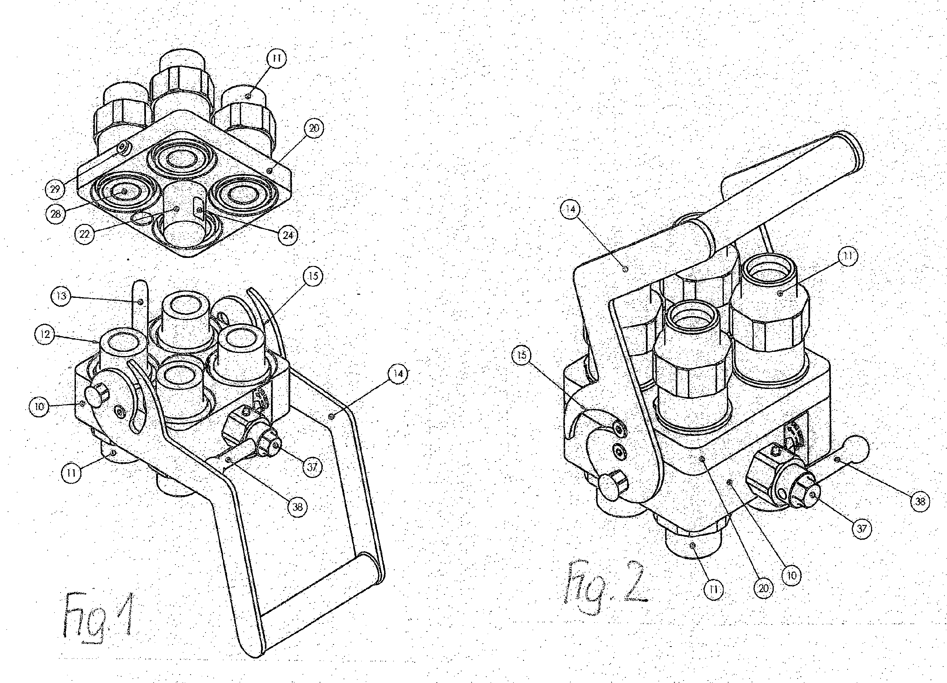

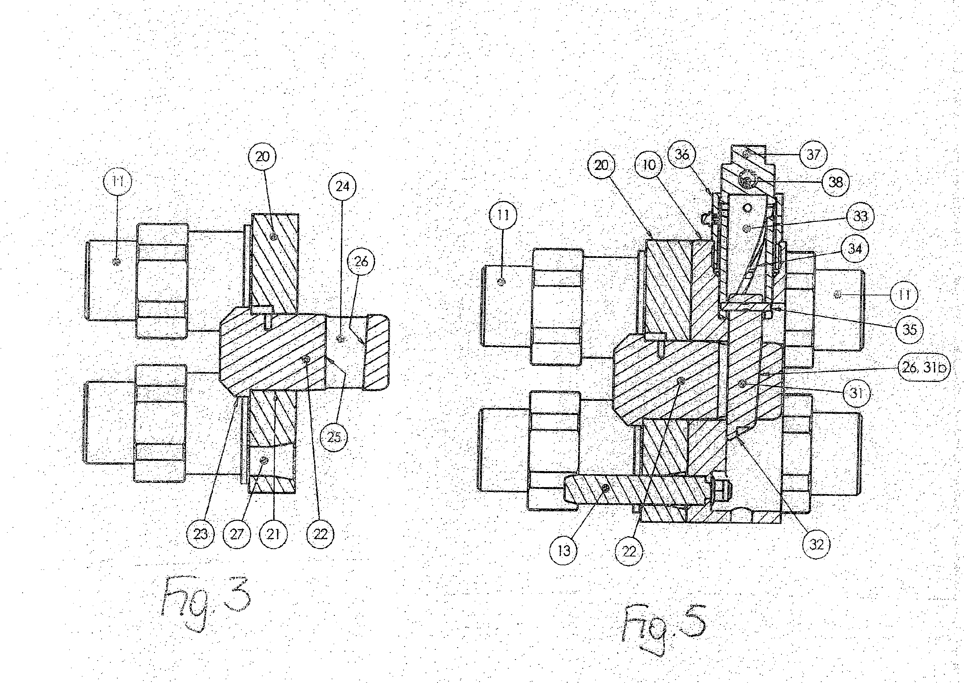

Die aus Figur 1 ersichtliche Schnellkupplung weist einen ersten unteren Verbindungsblock 10 auf, der an seiner Unterseite Leitungsanschlüsse 11 zum Anschluss der jeweils mittels der Schnellkupplung zu verbindenden Leitungen aufweist, wobei den Leitungsanschlüssen 11 auf der Oberseite des Verbindungsblocks 10 Steckteile 12 zugeordnet sind, die zum dichtenden Eingriff in entsprechend an einem zweiten, oberen Verbindungsblock 20 ausgebildete Hülsenteile 28 eingerichtet sind. Ferner steht von der Oberseite des ersten Verbindungsblocks 10 ein Zentrierstift 13 ab, der zum Eingriff in eine an dem zweiten Verbindungsblock 20 entsprechend ausgebildete Öffnung 27 (Figur 3) eingerichtet ist und beim Zusammenfahren der beiden Verbindungsblöcke 10, 20 beim Kuppeln der Schnellkupplung die beiden Verbindungsblöcke gegeneinander führt. An dem ersten Verbindungsblock 10 ist ein U-förmiger und den Verbindungsblock 10 zwischen seinen Armen außen einfassender Kupplungshebel 14 angeordnet, der am Ende seiner beiden Arme jeweils eine nach oben über den ersten Verbindungsblock 10 überstehende einseitig offene Kulisse 15 aufweist, in welcher ein an dem zweiten Verbindungsblock 20 jeweils angeordnetes Aufnahmeelement 29 aufgenommen wird, so dass bei der entsprechenden Verschwenkung des Kupplungshebels 14 bei der in Figur 1 gezeigten Anordnung entgegen dem Uhrzeigersinn die beiden Verbindungsblöcke 10, 20 in eine gegenseitige Anlage gebracht werden, wie aus Figur 2 ersichtlich. Eine derartige Ausbildung der Verbindungsblöcke einschließlich der Anordnung des Kupplungshebels ist aus der gattungsbildenden DE 10 2004 055 001 A1 bekannt.

Schließlich ist an der dem Kupplungshebel 14 zugewandten Stirnseite des ersten Verbindungsblocks 10 noch eine Handhabe 38 für die Betätigung einer der nachfolgend noch zu beschreibenden zusätzlichen Sicherheitsverriegelung dargestellt.

An dem ebenfalls aus Figur 1 ersichtlichen zweiten, oberen Verbindungsblock 20 sind wiederum entsprechende Leitungsanschlüsse 11 ausgebildet, ebenso die zugehörigen Hülsenteile 28.

Aus Figur 3 ist insbesondere der einen ersten Bestandteil der erfindungsgemäßen zusätzlichen Sicherheitsverriegelung bildende Sicherungsbolzen 22 erkennbar, der bei dem dargestellten Ausführungsbeispiel in eine zentral zwischen den Leitungsanschlüssen 11 angeordnete Bohrung 21 eingesetzt ist und sich mit einem an seinem oberen Ende angebrachten umlaufenden Flansch 23 an dem zweiten, oberen Verbindungsblock 20 abstützt. In seinem über die Ebene des oberen Verbindungsblocks 20 hervorstehenden und somit bei aneinander anliegenden Verbindungsblöcken 10, 20 in die Ebene des unteren ersten Verbindungsblocks 10 reichenden Ende ist der Sicherungsbolzen 22 mit einer ihn quer zu seiner Längsachse durchsetzenden Ausnehmung 24 versehen, die eine obere Ausnehmungsfläche 25 und eine gegenüberliegende untere Ausnehmungsfläche 26 ausbildet.

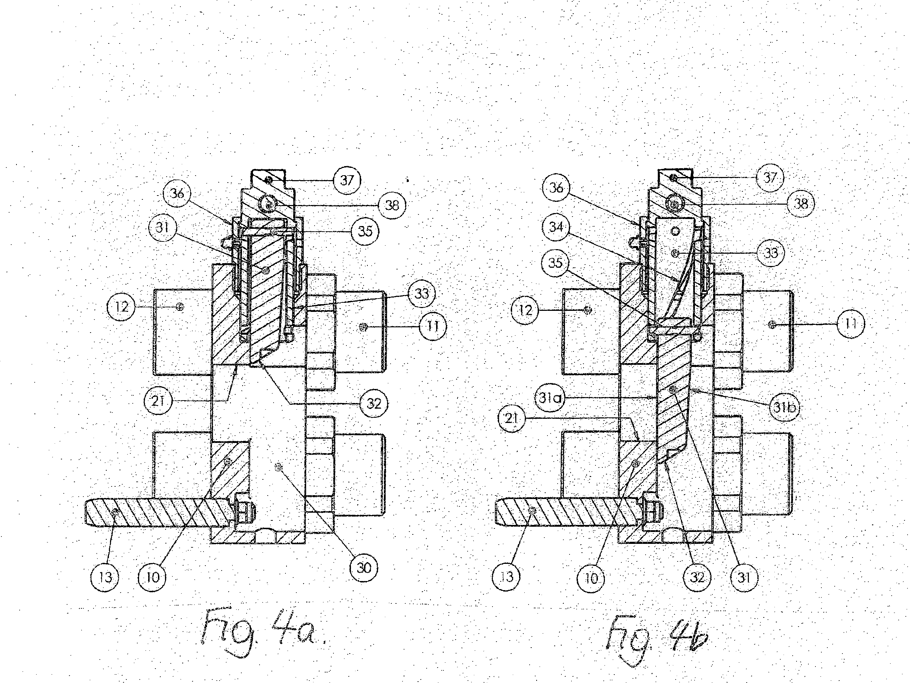

Aus Figur 4a ergibt sich der zu dem zweiten oberen Verbindungsblock 20 zugehörige untere erste Verbindungsblock 10, an dem die Leitungsanschlüsse 11, der Zentrierstift 13 und die Steckteile 12 erkennbar sind. Der untere Verbindungsblock 10 weist ebenfalls eine mit der Bohrung 21 im zweiten Verbindungsblock 20 fluchtende Bohrung 21 auf, in welcher bei aneinander liegenden Verbindungsblöcken 10, 20 der in die Bohrung 21 des oberen zweiten Verbindungsblocks 20 eingesteckte Sicherungsbolzen 22 zu liegen kommt. In der quer zur Längsachse der Bohrung 21 bzw. des darin liegenden Verbindungsbolzens 22 verlaufenden und durch die Anordnung der Ausnehmung 24 im Sicherungsbolzen 22 definierten Ebene ist ein Kanal 30 ausgebildet, in welcher ein Sicherungsschieber 31 angeordnet ist, der in seiner in Figur 4a dargestellten Lage sich in der Freigabestellung befindet, in welcher der Sicherungsschieber 31 außerhalb der Bohrung 21 im ersten Verbindungsblock 10 steht.

Wie sich dazu aus einem Vergleich der Figuren 4a und 4b ergibt, ist der Sicherungsschieber 31 mittels einer noch zu beschreibenden Betätigung in dem Kanal 30 axial in eine Sicherungsstellung verschiebbar, in welcher der Sicherungsschieber 31 die Bohrung 21 quer durchsetzt. Befindet sich entsprechend Figur 5 bei aneinander anliegenden Verbindungsblöcken 10, 20 der Sicherungsbolzen 22 in der Bohrung 21, so fluchtet dessen Ausnehmung 24 mit dem Kanal 30, so dass entsprechend der Darstellung in Figur 5 in der Sicherungsstellung der Sicherungsschieber 31 ebenfalls die Ausnehmung 24 des Sicherungsbolzens 22 quer durchsetzt. Dabei weist der Sicherungsschieber 31 an seinem vorderen Ende eine Anschrägung 32 zum Einfahren in die Ausnehmung 24 auf und reicht in seiner Sicherungsstellung gemäß Figur 5 über die Bohrung 21 bzw. den Sicherungsbolzen 22 hinaus, so dass sich das vordere Ende des Sicherungsschiebers 31 wiederum im gegenüberliegenden Bereich des Kanals 30 in dem ersten Verbindungsblock 10 abstützt.

Der Sicherungsschieber 31 weist eine Keilform mit einer senkrecht zur Längsachse des Sicherungsbolzens 22 ausgerichteten oberen Fläche 31a und mit einer gegenüberliegenden, unter einem Keilwinkel geneigten Fläche 31b auf. Entsprechend weisen die obere Ausnehmungsfläche 25 und die untere Ausnehmungsfläche 26 der Ausnehmung 24 im Sicherungsbolzen 22 eine dementsprechende Ausrichtung auf, was bedeutet, dass die untere Ausnehmungsfläche 26 bei dem dargestellten Ausführungsbeispiel ebenfalls unter einem entsprechenden Keilwinkel verläuft. Dieser Keilwinkel ist vorzugsweise derart ausgelegt, dass sich eine Selbsthemmung der Keilverbindung zwischen Sicherungsschieber 31 und Sicherungsbolzen 22 einstellt. Zur axialen Bewegung des Sicherungsschiebers 31 ist bei dem in Figuren 4a und 4b bzw. 5 dargestellten Ausführungsbeispiel vorgesehen, dass der Sicherungsschieber mit einer in dem Verbindungsblock 10 drehbar angeordneten Hülse 33 zusammenwirkt, wobei in der Außenwandung der Hülse eine schraubenförmige Kulisse 34 ausgebildet ist, in die ein radial am Sicherungsschieber 31 angebrachter Stift 35 eingreift, so dass eine Drehung der Hülse 33 in eine axiale Verschiebung des Sicherungsschiebers 31 umgesetzt wird. So ist bei der in Figur 4a dargestellten Freigabestellung der Sicherungsschieber 31 überwiegend auf seinem äußeren Umfang von der Hülse 33 umfasst, während er in der aus Figur 4b ersichtlichen Sicherungsstellung aus der Hülse 33 ausgefahren ist. Die Hülse 33 ist in einer in das ausgehende Ende des Kanals 30 eingeschraubten Lagerbuchse 36 drehbar gelagert, wobei an ihrem über die Lagerbuchse 36 hervorstehenden Ende die Hülse einen wellenförmigen Ansatz 37 ausbildet, der eine Handhabe 38 trägt. Durch Drehung der Handhabe 38 wird die Hülse 33 in Drehung versetzt, was in die Axialbewegung des Sicherungsschiebers 31 umgesetzt wird.

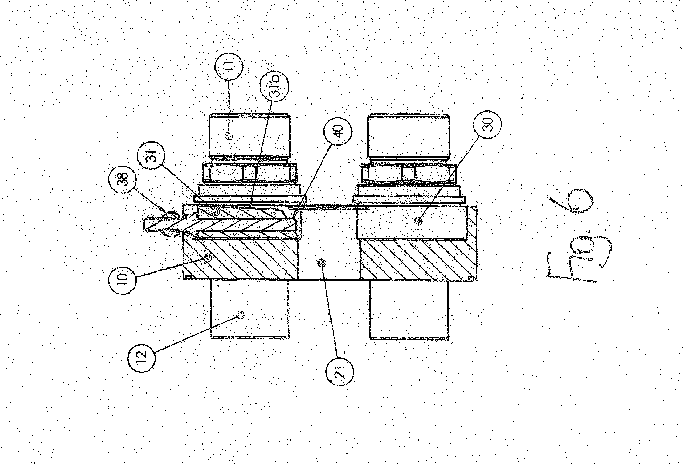

Das in Figur 6 dargestellte Ausführungsbeispiel unterscheidet sich von dem vorstehend ausführlich beschriebenen Ausführungsbeispiel lediglich dadurch, dass zur Axialverschiebung des Sicherungsschiebers 31 im Kanal 30 eine Gewindestange 40 vorgesehen ist, auf welcher der Sicherungsschieber 31 mit einem entsprechenden Gewinde verschiebbar geführt ist, wobei an dem über den zugeordneten Verbindungsblock 10 überstehenden Ende der Gewindestange 40 wiederum eine Handhabe 38 für die Drehung der Gewindestange 40 angeordnet ist.

Ist die Schnellkupplung durch Zusammenfahren ihrer Verbindungsblöcke mittels des Kupplungshebels 14 in die Kupplungsstellung verbracht, in welcher die Steckteile 12 des ersten Verbindungsblocks 10 in die Hülsenteile 28 des zweiten Verbindungsblocks 20 eingreifen, so reicht der in der Bohrung 21 des Verbindungsblocks 20 eingesteckte Sicherungsbolzen 22 in die Bohrung 21 des ersten unteren Verbindungsblocks 10, so dass im Anschluss daran durch Drehung der Handhabe 38 der Sicherungsschieber 31 in seine Verriegelungs- bzw. Eingriffsstellung mit der Ausnehmung 24 des Sicherungsbolzens 22 verschiebbar ist. Insbesondere durch die Keilwirkung zwischen Sicherungsschieber 31 und Sicherungsbolzen 22 wird eine zusätzliche Verbindungskraft auf die beiden Verbindungsblöcke 10, 20 aufgebracht, soweit sich der Sicherungsbolzen 22 mit seinem Flansch 23 an dem oberen zweiten Verbindungsblock 20 abstützt und an seinem gegenüberliegenden Ende durch den in seiner Ausnehmung 24 eingefahrenen Sicherungsschieber 31 ebenfalls in dem unteren ersten Verbindungsblock 10 festgelegt ist. Zum Lösen der Schnellkupplung muss zunächst der Sicherungsschieber 31 aus seiner Sicherungsstellung in seine Freigabestellung verschoben werden, wonach durch Lösen des Kupplungshebels 14 die beiden Verbindungsblöcke 10, 20 voneinander freikommen.

## Patentansprüche

1. Schnellkupplung zum Verbinden von wenigstens zwei unter Druck stehenden Leitungen mit einem ersten und einem zweiten, jeweils die zu verbindenden Leitungsanschlüsse (11) tragenden Verbindungsblock (10, 20), wobei der erste (10) und der zweite (20) Verbindungsblock mittels eines an einem der Verbindungsblöcke (10, 20) drehbar angeordneten und beim Kupplungsvorgang ein an dem anderen Verbindungsblock angebrachtes Aufnahmeelement (29) in einer Steuerkurve (15) erfassenden Kupplungshebels (14) in eine druckdichte Verbindung miteinander bringbar sind, **dadurch gekennzeichnet, dass** zur Sicherung der Kupplungsstellung von erstem (10) und zweitem (20) Verbindungsblock ein in eine in den beiden Verbindungsblöcken (10, 20) fluchtend an geordnete Bohrung (21) einsteckbarer und sich axial an einem der Verbindungsblöcke (10, 20) abstützender Sicherungsbolzen (22) vorgesehen ist, der in seiner in dem anderen Verbindungsblock (10, 20) liegenden Ebene eine ihn quer durchsetzende Ausnehmung (24) zur Aufnahme eines in dem anderen Verbindungsblock (10, 20) quer zur Längsachse des Sicherungsbolzens (22) verschiebbar angeordneten Sicherungsschiebers (31) aufweist, wobei der Sicherungsschieber (31) in seiner in der Ausnehmung (24) des Sicherungsbolzens (22) liegenden Sicherungsstellung die Ausnehmung (24) des Sicherungsbolzens (22) quer durchsetzt und sich beidseitig der den Sicherungsbolzen (22) aufnehmenden Bohrung (21) in dem den Sicherungsschieber (31) führenden Verbindungsblock (10) abstützt, und zwischen seiner Sicherungsstellung und einer außerhalb der Ausnehmung (24) des Sicherungsbolzens (22) gelegenen Freigabestellung mittels einer an dem Sicherungsschieber (31) angreifenden Betätigung (33, 38; 40, 38) axial verschiebbar ist.

2. Schnellkupplung nach Anspruch 1, **dadurch gekennzeichnet, dass** der Sicherungsschieber (31) eine Keilform mit einer senkrecht zur Längsachse des Sicherungsbolzens (22) ausgerichteten Fläche (31a) und mit einer gegenüberliegenden, unter einem Keilwinkel geneigten Fläche (31b) ausgebildet ist und die den Sicherungsschieber (31) in dessen Sicherungsstellung aufnehmende Ausnehmung (24) des Sicherungsbolzens (22) zu den Flächen (31a, 31b) des Sicherungsschiebers (31) kongruente Flächen (25, 26) aufweist.

3. Schnellkupplung nach Anspruch 2, **dadurch gekennzeichnet, dass** der Keilwinkel der Flächen (31b, 26) von Sicherungsschieber (31) und Ausnehmung (24) derart ausgelegt ist, dass sich eine Selbsthemmung der Keilverbindung zwischen Sicherungsschieber (31) und Sicherungsbolzen (22) einstellt.

4. Schnellkupplung nach einem der Ansprüche 1 bis 3, **dadurch gekennzeichnet, dass** der Sicherungsschieber (22) an seinem vorderen Ende mit einer Anschrägung (32) versehen ist.

5. Schnellkupplung nach einem der Ansprüche 1 bis 4, **dadurch gekennzeichnet, dass** die Betätigung für die axiale Verschiebung des Sicherungsschiebers (31) aus einer in dem den Sicherungsschieber (31) aufweisenden Verbindungsblock (10) drehbar angeordneten Hülse (33) besteht und der zumindest auf einem Teil seiner Längserstreckung von der Hülse (33) umfasste Sicherungsschieber (31) mit wenigstens einem radial von ihm abstehenden Stift (35) in einer schraubenförmigen Kulisse (34) der Hülse (33) geführt ist derart, dass eine Drehung der Hülse (33) in eine axiale Verschiebung des Sicherungsschiebers (31) umgesetzt wird, wobei die Hülse (33) mittels einer an ihr angreifenden, außerhalb des Verbindungsblocks (10) gelegenen Handhabe (38) drehbar ist.

6. Schnellkupplung nach einem der Ansprüche 1 bis 4, **dadurch gekennzeichnet, dass** die Betätigung für die axiale Verschiebung des Sicherungsschiebers (31) aus einem an dem den Sicherungsschieber (31) aufweisenden Verbindungsblock (10) angeordneten, mit dem Sicherungsschieber (31) zu dessen axialer Verschiebung verbundenen Kniegelenkhebel besteht.

7. Schnellkupplung nach einem der Ansprüche 1 bis 4, **dadurch gekennzeichnet, dass** die Betätigung für die axiale Verschiebung des Sicherungsschiebers (31) aus einer an dem den Sicherungsschieber (31) aufweisenden Verbindungsblock (10) drehbar angeordneten Gewindestange (40) besteht, auf welcher der Sicherungsschieber (31) derart angeordnet und geführt ist, dass eine Drehung der Gewindestange (40) in eine axiale Verschiebung des Sicherungsschiebers (31) umgesetzt wird, wobei die Gewindestange (40) mittels einer an ihr angreifenden, außerhalb des Verbindungsblocks (10) gelegenen Handhabe (38) drehbar ist.

## Claims

1. A quick coupling for connecting at least two pressurised lines, having first and second connection blocks (10, 20), which each bear the line connections (11) to be connected, wherein the first connection block (10) and the second connection block (20) can be brought into a pressure-tight connection to each other by means of a coupling lever (14), which is arranged rotatably on one of the connection blocks (10, 20) and encloses a holding element (29) attached to the other connection block in a control curve (15) during the coupling process, **characterised in that** in order to secure the coupling position of the first connection block (10) and the second connection block (20), a securing bolt (22) is provided, which can be inserted into a bore (21) arranged flush in the two connection blocks (10, 20), is supported axially on one of the connection blocks (10, 20), and has a cut-out (24) in the plane of said securing bolt that lies in the other connection block (10, 20), which cut-out passes transversely through said securing bolt, for receiving a securing slide (31), which is arranged in the other connection block (10, 20) such that said securing slide can be displaced transversely to the longitudinal axis of the securing bolt (22), wherein the securing slide (31), when in the securing position thereof in the cut-out (24) in the securing bolt (22), transversely penetrates the cut-out (24) in the securing bolt (22) and is supported on both sides of the bore (21) receiving the securing bolt (22) in the connection block (10) guiding the securing slide (31), and said securing slide can be displaced axially between the securing position of said securing slide and a releasing position situated outside the cut-out (24) in the securing bolt (22) by an actuation means (33, 38; 40, 38) effective on the securing slide (31).

2. The quick coupling according to Claim 1, **characterised in that** the securing slide (31) is formed as a wedge having a face (31a) oriented perpendicularly to the longitudinal axis of the securing bolt (22) and having an opposite face (31b) inclined at a wedge angle, and the cut-out (24) in the securing bolt (22) that holds the securing slide (31) in the securing position thereof has congruent faces (25, 26) to the faces (31a, 31b) of the securing slide (31).

3. The quick coupling according to Claim 2, **characterised in that** the wedge angle of the faces (31b, 26) of securing slide (31) and cut-out (24) is laid out in such a manner that self-locking of the wedge connection between securing slide (31) and securing bolt (22) is produced.

4. The quick coupling according to any one of Claims 1 to 3, **characterised in that** the securing slide (22) is provided with a chamfer (32) at its front end.

5. The quick coupling according to any one of Claims 1 to 4, **characterised in that** the actuation means for the axial displacement of the securing slide (31) consists of a sleeve (33) arranged rotatably in the connection block (10) that has the securing slide (31), and the securing slide (31), which is enclosed by the sleeve (33) at least over some of the longitudinal extent of said securing slide, is guided with at least one pin (35) projecting radially from said securing slide in a helical slotted guide (34) in the sleeve (33) in such a manner that a rotation of the sleeve (33) is converted into an axial displacement of the securing slide (31), wherein the sleeve (33) can be rotated by means of a handle (38), which acts on said sleeve and is situated outside the connection block (10).

6. The quick coupling according to any one of Claims 1 to 4, **characterised in that** the actuation means for the axial displacement of the securing slide (31) consists of a toggle lever, which is arranged on the connection block (10) that has the securing slide (31) and is connected to the securing slide (31) for the axial displacement thereof.

7. The quick coupling according to any one of Claims 1 to 4, **characterised in that** the actuation means for the axial displacement of the securing slide (31) consists of a threaded rod (40) arranged rotatably on the connection block (10) that has the securing slide (31), on which threaded rod the securing slide (31) is arranged and guided in such a manner that a rotation of the threaded rod (40) is converted into an axial displacement of the securing slide (31), wherein the threaded rod (40) can be rotated by means of a handle (38), which acts on said threaded rod and is situated outside the connection block (10).

## Revendications

1. Raccord rapide pour relier au moins deux conduites sous pression à un premier et un deuxième bloc de liaison (10, 20) portant respectivement les raccordements de conduite (11) à relier, le premier (10) et le deuxième (20) bloc de liaison (10, 20) pouvant être mis en liaison étanche à la pression l'un avec l'autre au moyen d'un levier de couplage (14) disposé de manière rotative sur l'un des blocs de liaison (10, 20) et saisissant, lors du processus de couplage, un élément de réception (29) disposé sur l'autre bloc de liaison dans une came de commande (15), **caractérisé en ce que**, pour sécuriser la position de couplage du premier (10) et du deuxième (20) bloc de liaison, on prévoit un boulon de sécurité (22) pouvant être inséré dans un perçage (21) disposé en alignement dans les deux blocs de liaison (10, 20) et en appui axial sur l'un des blocs de liaison (10, 20) lequel présente, dans son plan situé dans l'autre bloc de liaison (10, 20), un évidement (24) le traversant transversalement pour la réception d'un poussoir de sécurité (31) disposé dans l'autre bloc de liaison (10, 20) de manière à pouvoir coulisser transversalement à l'axe longitudinal du boulon de sécurité (22), le poussoir de sécurité (31), dans sa position de sécurité située dans l'évidement (24) du boulon de sécurité (22), traversant transversalement l'évidement (24) du boulon de sécurité (22) et étant en appui, des deux côtés du perçage (21) réceptionnant le boulon de sécurité (22), dans le bloc de liaison (10) guidant le poussoir de sécurité (31), et pouvant se déplacer axialement entre sa position de sécurité et une position de libération située à en-dehors de l'évidement (24) du boulon de sécurité (22) au moyen d'un actionnement (33, 38, 40, 38) saisissant le poussoir de sécurité (31).

2. Raccord rapide selon la revendication 1, **caractérisé en ce que** le poussoir de sécurité (31) est réalisé avec une forme de cale avec une surface (31a) orientée perpendiculairement à l'axe longitudinal du boulon de sécurité (22) et avec une surface (31b) située en vis-à-vis, inclinée selon un angle de calage, et **en ce que** l'évidement (24) réceptionnant le poussoir de sécurité (31), dans la position de sécurité de celui-ci, du boulon de sécurité (22), présente des surfaces (25, 26) congruentes aux surface (31a, 31b) du poussoir de sécurité (31).

3. Raccord rapide selon la revendication 2, **caractérisé en ce que** l'angle de calage des surfaces (31b, 26) du poussoir de sécurité (31) et de l'évidement (24) est étudié de manière à ce qu'un auto-blocage du clavetage entre le poussoir de sécurité (31) et le boulon de sécurité (22) ait lieu.

4. Raccord rapide selon l'une des revendications 1 à 3, **caractérisé en ce que** le poussoir de sécurité (22) est muni d'un biseautage (32) sur son extrémité antérieure.

5. Raccord rapide selon l'une des revendications 1 à 4, **caractérisé en ce que** l'actionnement pour le déplacement axial du poussoir de sécurité (31) se compose d'une gaine (33) disposée de manière à pouvoir tourner dans le bloc de liaison (10) présentant le poussoir de sécurité (31), et **en ce que** le poussoir de sécurité (31), entouré au moins sur une partie de son étendue longitudinale par la gaine (33), est guidé à l'aide d'au moins une tige (35) dépassant radialement de celui-ci dans une coulisse (34) en forme de vis de la gaine (33) de manière à ce qu'une rotation de la gaine (33) soit transformée en un déplacement axial du poussoir de sécurité (31), la gaine (33) pouvant tourner au moyen d'une manette (38) la saisissant, située en-dehors du bloc de liaison (10).

6. Raccord rapide selon l'une des revendications 1 à 4, **caractérisé en ce que** l'actionnement pour le déplacement axial du poussoir de sécurité (31) se compose d'une genouillère disposée sur le bloc de liaison (10) présentant le poussoir de sécurité (31), reliée au poussoir de sécurité (31) pour le déplacement axial de celui-ci.

7. Raccord rapide selon l'une des revendications 1 à 4, **caractérisé en ce que** l'actionnement pour le déplacement axial du poussoir de sécurité (31) se compose d'une tige filetée (40) disposée de manière à pouvoir tourner sur le bloc de liaison (10) présentant le poussoir de sécurité (31), sur laquelle le poussoir de sécurité (31) est disposé et guidé de manière à ce qu'une rotation de la tige filetée (40) est transformée en un déplacement axial du poussoir de sécurité (31), la tige filetée (40) pouvant tourner au moyen d'une manette (38) la saisissant, située en-dehors du bloc de liaison (10).
